# EUROPEAN PATENT APPLICATION

(11) **EP 4 807 702 A1**
(43) Date of publication of application: **16.09.2026**
(21) Application number: 23958310.7
(22) Date of filing: 09.11.2023
(51) Int. Cl.: G07B 15/00, G06Q 20/40

(54) **INFORMATION PROCESSING SYSTEM, INFORMATION PROCESSING METHOD, AND RECORDING MEDIUM**

(71) Applicant: NEC Corporation, 108-8001 Tokyo (JP)
(72) Inventor: ITO, Atsushi, Tokyo 108-8001 (JP); SUGA, Akito, Tokyo 108-8001 (JP); FUNAYAMA, Chisato, Tokyo 108-8001 (JP); YOSHIMI, Kosuke, Tokyo 108-8001 (JP); TOIZUMI, Takahiro, Tokyo 108-8001 (JP)
(74) Representative: Betten & Resch
(86) International application number: PCT/JP2023/040422
(87) International publication number: WO 2025/099909

(57) **Abstract**

An information processing system includes: a first acquisition unit that acquires vehicle information and billing information; an output unit that outputs a request for approval regarding the billing information to a vehicle identified based on the vehicle information; a second acquisition unit that acquires biometric information or a biometric authentication result, and a response to the request for approval, from the vehicle; and a control unit that controls processing related to the billing information, based on the biometric information or the biometric authentication result and based on the response.

## Description

### Technical Field

The present disclosure relates to technical fields of an information processing system, an information processing method, and a recording medium.

### Background Art

As an example of this type of system, for example, there is proposed a system that transfers an electronic number associated with a vehicle, which is stored by an electronic license plate or an electronic number plate mounted on the vehicle, to a roadside antenna via short-range wireless communication (see Patent Literature 1).

### Citation List

### Patent Literature

Patent Literature 1: JP2004-220258A

### Summary

### Technical Problem

It is an example object of the present disclosure to provide an information processing system, an information processing method, and a recording medium that aim to improve the technique/technology related to Citation List described above.

### Solution to Problem

An information processing system according to an example aspect includes: a first acquisition unit that acquires vehicle information and billing information; an output unit that outputs a request for approval regarding the billing information to a vehicle identified based on the vehicle information; a second acquisition unit that acquires biometric information or a biometric authentication result, and a response to the request for approval, from the vehicle; and a control unit that controls processing related to the billing information, based on the biometric information or the biometric authentication result and based on the response.

An information processing method according to an example aspect includes: acquiring vehicle information and billing information; outputting a request for approval regarding the billing information to a vehicle identified based on the vehicle information; acquiring biometric information or a biometric authentication result, and a response to the request for approval, from the vehicle; and controlling processing related to the billing information, based on the biometric information or the biometric authentication result and based on the response.

A recording medium according to an example aspect is a recording medium on which a computer program that allows a computer to execute an information processing method is recorded, the information processing method including: acquiring vehicle information and billing information; outputting a request for approval regarding the billing information to a vehicle identified based on the vehicle information; acquiring biometric information or a biometric authentication result, and a response to the request for approval, from the vehicle; and controlling processing related to the billing information, based on the biometric information or the biometric authentication result and based on the response.

### Brief Description of Drawings

[FIG. 1] FIG. 1 is a diagram illustrating an example configuration of an information processing system.
[FIG. 2] FIG. 2 is a flowchart illustrating an example operation of the information processing system.
[FIG. 3] FIG. 3 is a diagram illustrating another example configuration of the information processing system.
[FIG. 4] FIG. 4 is a diagram illustrating an example configuration of a computer.
[FIG. 5] FIG. 5 is a diagram illustrating an example of a registration information database.
[FIG. 6] FIG. 6 is a diagram illustrating an example of the registration information database.
[FIG. 7] FIG. 7 is a diagram illustrating an example of a display screen.
[FIG. 8] FIG. 8 is a diagram illustrating another example of the registration information database.
[FIG. 9] FIG. 9 is a diagram illustrating another example configuration of the information processing system.
[FIG. 10] FIG. 10 is a diagram illustrating another example configuration of the information processing system.
[FIG. 11] FIG. 11 is a diagram illustrating another example configuration of the information processing system.

### Description of Example embodiments

### <First Example Embodiment>

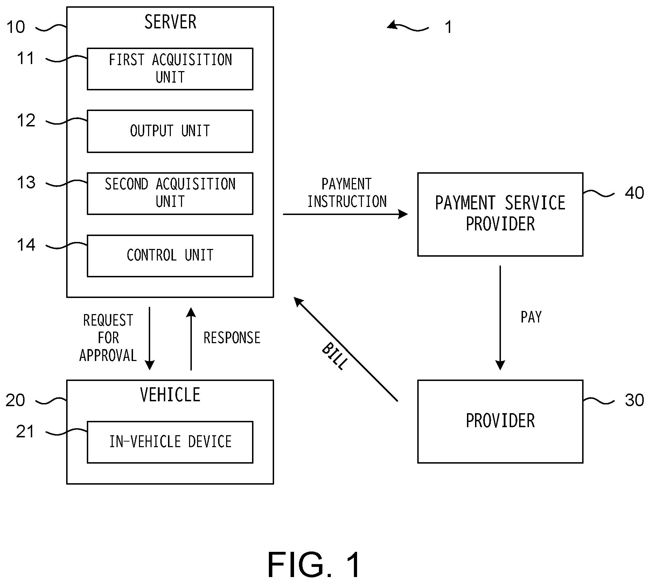

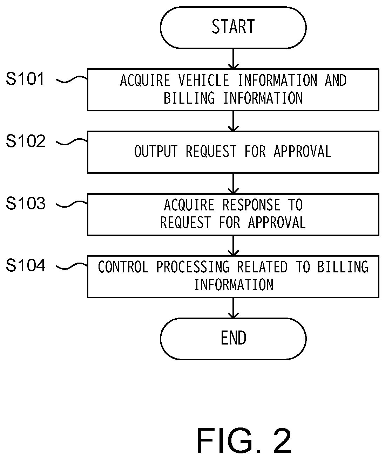

An information processing system, an information processing method, and a recording medium according to a first example embodiment will be described with reference to FIG. 1 and FIG. 2. Hereinafter, an information processing system 1 is used to describe the information processing system, the information processing method, and the recording medium according to the first example embodiment.

In FIG. 1, the information processing system 1 includes a server 10, a vehicle 20, a provider 30, and a payment service provider 40. Note that, in addition to or in place of the vehicle 20, the information processing system 1 may include, for example, ships, airplanes, helicopters, submarines, motorcycles, and the like. The vehicle 20 is configured to communicate with the server 10 via a network such as the Internet. The vehicle 20 may be, for example, a connected car. In the information processing system 1, the provider 30 provides at least one of products and services, to at least one of a user who is currently in the vehicle 20 and a user who was previously in the vehicle 20. Here, providing at least one of the products and services to a user who was previously in the vehicle 20, may include, for example, providing at least one of the products and services ordered by the user while riding in the vehicle 20, to the user after alighting from the vehicle 20. The provider 30 may be, for example, an owner or operator of a drive-through facility where a user can purchase products while remaining in the vehicle 20. The provider 30 may be, for example, at least one of the owner, operator, employee, or temporary staff member of a facility where a user can receive services while remaining in the vehicle 20, such as a drive-in theater. The provider 30 may be, for example, at least one of the owner, operator, employee, or temporary staff of a parking lot.

An overview of an operation of the information processing system 1 will be described below. In a case where a user of the vehicle 20 wishes to perform at least one of purchasing products and using services provided by the provider 30, the provider 30 transmits billing information about at least one of purchasing products and using services to the server 10. The server 10 outputs a request for approval regarding the billing information to the vehicle 20. In a case where the user of the vehicle 20 approves, the server 10 issues a payment instruction based on the billing information, to the payment service provider 40. As a result, a predetermined amount of money (e.g., product cost, service fee) is paid from the payment service provider 40 to the provider 30.

In order to enable the operation of the information processing system 1 described above, the server 10 is equipped with a first acquisition unit 11, an output unit 12, a second acquisition unit 13, and a control unit 14. Furthermore, in order to enable the operation of the information processing system 1 described above, the vehicle 20 is equipped with an in-vehicle device 21. Note that the in-vehicle device 21 is not limited to a single device, but may include a plurality of devices. For example, the in-vehicle device 21 may include a camera, a display, a speaker, a touch panel, a microphone, and the like.

The following describes the details of the operation of the information processing system 1. In a case where the user of the vehicle 20 wishes to perform at least one of purchasing products and using services provided by the provider 30, the provider 30 may acquire, for example, an image containing the exterior of the vehicle 20 (specifically, a license plate/number plate) and information about the license plate of the vehicle 20 (e.g., a vehicle registration number). Furthermore, the information about the license plate of the vehicle 20 may be acquired by applying predetermined image processing to the image containing the exterior of the vehicle 20, or may be acquired based on an input by an employee of the provider 30 via an input apparatus (e.g., a keyboard, a touch panel). Acquiring the information about the license plate of the vehicle 20 by applying the predetermined image processing to the image containing the exterior of the vehicle 20, may include acquiring information about characters displayed on the license plate by applying character recognition processing to an image containing the license plate.

The provider 30 links, for example, at least one of the image containing the exterior of the vehicle 20 and the information about the license plate of the vehicle 20 to the billing information about at least one of purchasing products and using services, and transmits them to the server 10. The first acquisition unit 11 of the server 10 may, for example, apply predetermined image processing to the image containing the exterior of the vehicle 20, thereby acquiring the information about the license plate of the vehicle 20 serving as vehicle information about the vehicle 20. Since the image containing the exterior of the vehicle 20 and the billing information are linked to each other, the information about the license plate of the vehicle 20 acquired from the image containing the exterior of the vehicle 20 is also linked to the billing information. The first acquisition unit 11 may acquire the information about the license plate of the vehicle 20 serving as the vehicle information and transmitted from the provider 30. For example, the output unit 12 of the server 10 may identify the vehicle 20, based on the information about the license plate of the vehicle 20 serving as the vehicle information.

The output unit 12 outputs the request for approval regarding the billing information, to the vehicle 20 identified based on the vehicle information. The in-vehicle device 21 of the vehicle 20, upon receiving the request for approval outputted from the output unit 12, notifies the user of the existence of the request for approval. For example, the in-vehicle device 21 may notify the user of the existence of the request for approval by displaying a screen related to the request for approval. For example, the in-vehicle device 21 may notify the user of the existence of the request for approval by outputting audio/sound related to the request for approval. For example, the in-vehicle device 21 may notify the user of the existence of the request for approval by displaying a screen related to the request for approval and outputting audio/sound related to the request for approval. The in-vehicle device 21 may obtain the user's response to the request for approval, based on the user's input operation.

For example, the user of the vehicle 20 may enter an input indicating "Approval" or "Rejection/Disapproval" via a touch panel serving as the in-vehicle device 21. For example, the user may enter an input (i.e., voice input) indicating "Approval" or "Rejection" via a microphone serving as the in-vehicle device 21. Furthermore, in a case where the user enters an input indicating "Rejection" (for example, in a case where the user cancels an order), processing for the vehicle 20 may be terminated.

In a case where the user enters an input indicating "Approval," the in-vehicle device 21 acquires the user's biometric information. The biometric information may include, for example, at least one of a facial image containing the user's face and an eye image containing the user's iris. Furthermore, in a case where the user enters an input (i.e., voice input) indicating "Approval" via the microphone, the in-vehicle device 21 may acquire the user's voice as the biometric information.

The in-vehicle device 21 may link the biometric information to the user's response to the request for approval (e.g., "Approval" or "Rejection") and transmit them to the server 10. In this case, the second acquisition unit 13 of the server 10 may acquire the biometric information and the response to the request for approval that are linked to each other. Furthermore, in a case where the user's response to the request for approval is "Rejection," the in-vehicle device 21 may transmit only the response to the request for approval to the server 10.

When the second acquisition unit 13 acquires the biometric information and the response to the request for approval that are linked to each other, the control unit 14 of the server 10 may control processing related to the billing information, based on the biometric information and the response to the request for approval. For example, as a part of the processing related to the billing information, the control unit 14 may perform biometric authentication on the user using the biometric information.

The biometric authentication may be, for example, at least one of facial recognition/authentication and iris recognition/authentication. That is, the control unit 14 may perform facial recognition using the user's facial image, perform iris recognition using the user's eye image, or perform both facial recognition using the facial image and iris recognition using the eye image (i.e., perform multimodal biometric authentication). For example, in a case where the biometric information is the user's voice, the control unit 14 may perform voice recognition/authentication. Furthermore, the control unit 14 may perform not only the facial recognition, the iris recognition, and the voice recognition, but also, for example, at least one of fingerprint recognition/authentication, palmprint recognition/authentication, vein recognition/authentication, and ear acoustic authentication.

In a case where the biometric authentication of the user is successful (e.g., in a case where a matching score, which indicates a degree of match between feature quantities associated with the user's biometric information and pre-registered feature quantities, is greater than or equal to a predetermined threshold) and the response to the request for approval is "Approval," the control unit 14 may issue a payment instruction indicating that a predetermined amount of money should be paid to the provider 30, to the payment service provider 40, based on the billing information. As a result, the predetermined amount of money may be paid from the payment service provider 40 to the provider 30. Furthermore, in a case where the biometric authentication of the user is failed (for example, in a case where the aforementioned matching score is less than the predetermined threshold), the processing related to the billing information may be terminated. In this case, the user may be notified that the biometric authentication is failed.

Alternatively, the in-vehicle device 21 may perform biometric authentication on the user using the biometric information. For example, the in-vehicle device 21 may perform biometric authentication on the user by matching feature quantities associated with the acquired biometric information to feature quantities associated with the biometric information pre-registered in the in-vehicle device 21. In this case, the in-vehicle device 21 may perform one-to-one authentication or one-to-N authentication. Furthermore, the in-vehicle device 21 may transmit the user's biometric information to another apparatus (not illustrated) that is different from the server 10. The in-vehicle device 21 may acquire a result of the biometric authentication of the user performed by the aforementioned other apparatus.

The in-vehicle device 21 may link a biometric authentication result indicating the result of the biometric authentication of the user to the response to the request for approval and transmit them to the server 10. In this case, the second acquisition unit 13 of the server 10 may acquire the biometric authentication result and the response to the request for approval that are linked to each other. In a case where the biometric authentication result indicates that the biometric authentication is successful and the response to the request for approval is "Approval," the control unit 14 may issue a payment instruction indicating that a predetermined amount of money should be paid to the provider 30, to the payment service provider 40, based on the billing information. As a result, the predetermined amount of money may be paid from the payment service provider 40 to the provider 30.

An operation of the server 10 in the information processing system 1 will be described with reference to a flowchart in FIG. 2. In FIG. 2, the first acquisition unit 11 of the server 10 acquires the vehicle information and the billing information (step S101). For example, the output unit 12 of the server 10 may identify the vehicle 20 based on the vehicle information. The output unit 12 outputs the request for approval regarding the billing information, to the vehicle 20 identified based on the vehicle information (Step S102).

The second acquisition unit 13 of the server 10 acquires the biometric information or biometric authentication result and the request for approval that are linked to each other (Step S103). The control unit 14 of the server 10 controls the processing related to the billing information, based on the biometric information or biometric authentication result and based on the aforementioned response (Step S104).

Thus, performed in the information processing system 1 is an information processing method including: acquiring vehicle information and billing information; outputting a request for approval regarding the billing information to a vehicle identified based on the vehicle information; acquiring biometric information or a biometric authentication result, and a response to the request for approval, from the vehicle; and controlling processing related to the billing information, based on the biometric information or the biometric authentication result and based on the response.

The information processing system 1 described above may be realized by a computer reading a computer program recorded on a recording medium. In this case, a computer program that allows a computer to execute an information processing method is recorded on a recording medium, the information processing method including: acquiring vehicle information and billing information; outputting a request for approval regarding the billing information to a vehicle identified based on the vehicle information; acquiring biometric information or a biometric authentication result, and a response to the request for approval, from the vehicle; and controlling processing related to the billing information, based on the biometric information or the biometric authentication result and based on the response.

### (Technical Effect)

For example, a drive-through facility, the user can purchase products while remaining in the vehicle. Payment transactions related to purchasing products (e.g., the exchange of cash, credit card operations) are often conducted between the user inside the vehicle and a facility employee outside the vehicle (or, in some cases, an employee inside the facility). To complete the payment transactions, the user of the vehicle needs to extend their arm out the window or lean out of the vehicle. Such actions place a burden on the user of the vehicle. In addition, in a case where a time required for the payment transactions per user is relatively long, there may be a queue for payment, or traffic congestion around the facility. This may result in an opportunity loss of the facility.

In contrast, in the information processing system 1, the user of the vehicle 20 responds to the request for approvals via the in-vehicle device 21. That is, in the information processing system 1, for example, there is no need for the payment transactions between the user of the vehicle 20 and an employee of the drive-through facility. Therefore, according to the information processing system 1, it is possible to reduce a burden on both the user of the vehicle 20 and the facility employee, while also reducing the time required for the payment transactions and thereby preventing the opportunity loss of the facility. Furthermore, in the information processing system 1, the biometric authentication of the user is performed (in other words, the user's identity is verified), and the processing related to the billing information can be thus performed in a secure manner. Furthermore, the information processing system 1 may be applied not only to the drive-through facility, but also to, for example, a parking fee payment system for a paid parking lot, a toll collection system for toll roads, and the like.

### <Second Example Embodiment>

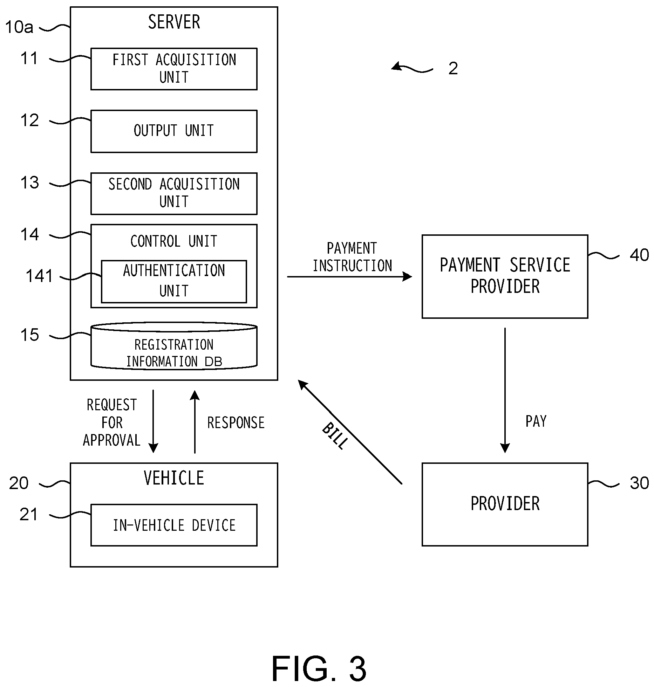

An information processing system, an information processing method, and a recording medium according to a second example embodiment will be described with reference to FIG. 3 to FIG. 5. Hereinafter, an information processing system 2 is used to describe the information processing system, the information processing method, and the recording medium according to the second example embodiment. Note that descriptions overlapping with those in the first example embodiment described above are appropriately omitted in the second example embodiment.

In FIG. 3, the information processing system 2 includes a server 10a, the vehicle 20, the provider 30, and the payment service provider 40. The server 10a includes the first acquisition unit 11, the output unit 12, the second acquisition unit 13, the control unit 14, and a registration information database 15.

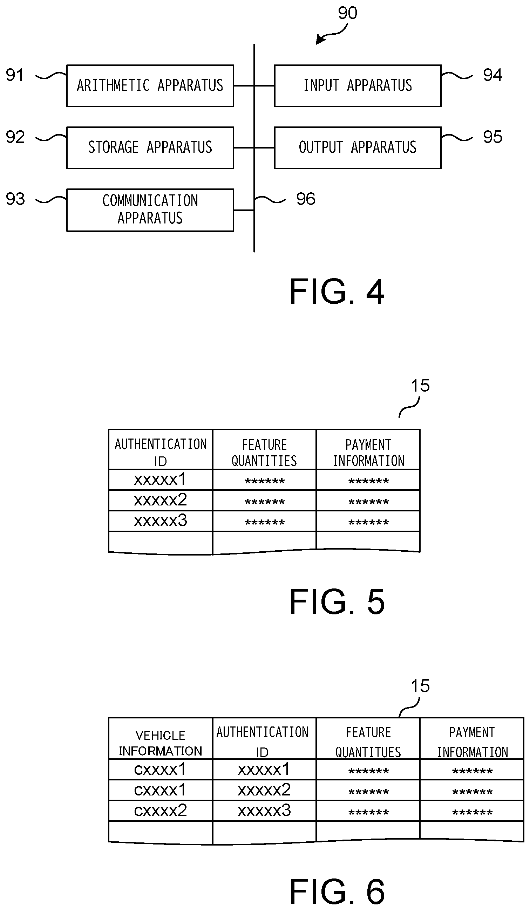

For example, the server 10a may be realized by a computer 90 illustrated in FIG. 4. The computer 90 includes an arithmetic apparatus 91, a storage apparatus 92, and a communication apparatus 93. The computer 90 may further include an input apparatus 94 and an output apparatus 95. The arithmetic apparatus 91, the storage apparatus 92, the communication apparatus 93, the input apparatus 94, and the output apparatus 95 may be connected via a data bus 96. Note that the computer 90 may not include at least one of the input apparatus 94 and the output apparatus 95.

The arithmetic apparatus 91 may include, for example, at least one of a CPU (Central Processing Unit), a GPU (Graphics Processing Unit), a FPGA (Field-Programmable Gate Array), a TPU (Tensor Processing Unit), and a quantum processor.

The storage apparatus 92 may include, for example, at least one of a RAM (Random Access Memory), a ROM (Read-Only Memory), a hard disk apparatus, a magneto-optical disk apparatus, a SSD (Solid-State Drive), and an optical disk array. That is, the storage apparatus 92 may include a non-transitory recording medium. The storage apparatus 92 is configured to store desired data. For example, the storage apparatus 92 may temporarily store a computer program to be executed by the arithmetic apparatus 91. The storage apparatus 92 may temporarily store data that are temporarily used by the arithmetic apparatus 91 when the arithmetic apparatus 91 is executing the computer program.

The communication apparatus 93 may be configured to communicate with an apparatus external to the computer 90. Furthermore, the communication apparatus 93 may perform wired communication or wireless communication.

The input apparatus 94 is an apparatus that is configured to receive an input of information to the in-vehicle device 21 from an external source. The input apparatus 94 may include an operating apparatus (e.g., a keyboard, a mouse, a touch panel, etc.) that is operable by a user of the computer 90. The input apparatus 94 may include a recording medium reading apparatus that is configured to read information recorded on a recording medium that is attachable to and detachable from the computer 90, such as a USB (Universal Serial Bus) memory. Furthermore, in a case where information is inputted to the computer 90 via the communication apparatus 93 (in other words, in a case where the computer 90 acquires information via the communication apparatus 93), the communication apparatus 93 may function as an input apparatus.

The output apparatus 95 is an apparatus that is configured to output information to the outside of the computer 90. The output apparatus 95 may output, as the aforementioned information, visual information such as characters/text and images, auditory information such as sound/voice, or tactile information such as vibration. The output apparatus 95 may include, for example, at least one of a display, a speaker, a printer, and a vibration motor. The output apparatus 95 may also be configured to output information to a recording medium that is attachable to and detachable from the computer 90, such as a USB memory. Furthermore, in a case where the computer 90 outputs information via the communication apparatus 93, the communication apparatus 93 may function as an output apparatus.

In a case where the server 10a is realized by the computer 90, the first acquisition unit 11, the output unit 12, the second acquisition unit 13, and the control unit 14 of the server 10a may be realized by the arithmetic apparatus 91. For example, the first acquisition unit 11, the output unit 12, the second acquisition unit 13, and the control unit 14 may be realized as logical functional blocks in the arithmetic apparatus 91. For example, the first acquisition unit 11, the output unit 12, the second acquisition unit 13, and the control unit 14 may be realized as physical processing circuits in the arithmetic apparatus 91. For example, at least one of the first acquisition unit 11, the output unit 12, the second acquisition unit 13, and the control unit 14 may be realized in the arithmetic apparatus 91 in a mixed form of a logical functional block and a physical processing circuit (i.e., hardware).

In a case where at least a part of the first acquisition unit 11, the output unit 12, the second acquisition unit 13, and the control unit 14 is realized as a functional block, the at least a part of the first acquisition unit 11, the output unit 12, the second acquisition unit 13, and the control unit 14 may be realized by the arithmetic apparatus 91 executing a predetermined computer program. The arithmetic apparatus 91 may acquire (in other words, may read/load) the predetermined computer program from the storage apparatus 92. The arithmetic apparatus 91 may read/load the predetermined computer program stored on a computer-readable, non-transitory recording medium, using a not-illustrated recording medium reading apparatus provided in the computer 90. The arithmetic apparatus 91 may also acquire (in other words, may download or read/load) the predetermined computer program from a not-illustrated apparatus external to the computer 90 via the communication apparatus 93.

In a case where the server 10a is realized by the computer 90, the registration information database 15 may be stored in the storage apparatus 92. For example, as illustrated in FIG. 5, the registration information database 15 may register/store an authentication ID, feature quantities used for biometric authentication, and payment information in association with one another. Furthermore, the in-vehicle device 21 may be realized by a computer similar to the computer 90.

An operation of the information processing system 2 will be described with reference to FIG. 3. In a case where the user of the vehicle 20 wishes to perform at least one of purchasing products and using services provided by the provider 30, the provider 30 may acquire, for example, the image containing the exterior of the vehicle 20 (specifically, a license plate) and the information about the license plate of the vehicle 20 (e.g., a vehicle registration number).

The provider 30 links, for example, at least one of the image containing the exterior of the vehicle 20 and the information about the license plate of the vehicle 20 to the billing information about at least one of purchasing products and using services, and transmits them to the server 10a. The license plate of the vehicle 20 can be confirmed from outside the vehicle 20. The information about the license plate, which may be, for example, a vehicle registration number, is information unique to the vehicle 20. Therefore, using the information about the license plate as the vehicle information, makes it possible to identify the vehicle 20 relatively easily.

For example, the provider 30 may link the image containing the exterior of the vehicle 20 to the billing information and transmit them to the server 10a. The first acquisition unit 11 of the server 10a may, for example, apply predetermined image processing to the image containing the exterior of the vehicle 20, thereby acquiring the information about the license plate of the vehicle 20 serving as the vehicle information about the vehicle 20. This configuration enables a burden on the provider 30 to be reduced, compared with a case where the provider 30 acquires the information about the license plate of the vehicle 20.

The first acquisition unit 11 may acquire the vehicle information and the billing information that are linked to each other, by acquiring, from the provider 30, at least one of the image containing the exterior of the vehicle 20 and the information about the license plate of the vehicle 20, along with the billing information. For example, the output unit 12 of the server 10a may identify the vehicle 20 based on the vehicle information.

The output unit 12 outputs the request for approval regarding the billing information, to the vehicle 20 identified based on the vehicle information. The in-vehicle device 21 of the vehicle 20, upon receiving the request for approval outputted from the output unit 12, notifies the user of the existence of the request for approval.

For example, the user of the vehicle 20 may enter an input indicating "Approval" or "Rejection," via a touch panel serving as the in-vehicle device 21. For example, the user may enter an input (i.e., voice input) indicating "Approval" or "Rejection" via a microphone serving as the in-vehicle device 21. Note that in a case where the user enters an input indicating "Rejection" (e.g., in a case where the user cancels an order), the processing for the vehicle 20 may be terminated.

In a case where the user enters an input indicating "Approval," the in-vehicle device 21 may acquire the user's biometric information. The biometric information may include, for example, at least one of a facial image containing the user's face and an eye image containing the user's iris. Note that the biometric information is not limited to at least one of the facial image and the eye image.

The in-vehicle device 21 may link the biometric information to the user's response to the request for approval (e.g., "Approval" or "Rejection") and transmit them to the server 10a. In this case, the second acquisition unit 13 of the server 10a may acquire the biometric information and the response to the request for approval that are linked to each other. Furthermore, in a case where the user's response to the request for approval is "Rejection," the in-vehicle device 21 may transmit only the response to the request for approval indicating "Rejection" to the server 10a.

When the second acquisition unit 13 of the server 10a acquires the biometric information and the response to the request for approval that are linked to each other, the control unit 14 of the server 10a may control the processing related to the billing information, based on the biometric information and the response to the request for approval. For example, as a part of the processing related to the billing information, the control unit 14 may control an authentication unit 141 to perform biometric authentication on the user using the biometric information. In this case, the authentication unit 141 may perform biometric authentication on the user by matching the feature quantities associated with the biometric information to the feature quantities registered in the registration information database 15. In the information processing system 2, the biometric authentication of the user is performed on the server 10a, and a processing load on the in-vehicle device 21 can be thus reduced, compared with a case where the biometric authentication of the user is performed on the in-vehicle device 21.

In a case where the biometric authentication of the user is successful, a person corresponding to the user is identified from among a plurality of persons registered in the registration information database 15 (specifically, the authentication ID of the person corresponding to the user is identified). The control unit 14 may acquire the payment information linked to the authentication ID of the person corresponding to the user, from the registration information database 15. Furthermore, the payment information may include, for example, at least one of credit card information, account information, prepaid card information, and electronic money information.

In a case where the user's response to the request for approval is "Approval," the control unit 14 may issue a payment instruction indicating that a predetermined amount of money should be paid to the provider 30, to the payment service provider 40, based on the acquired payment information and the billing information. As a result, the predetermined amount of money may be paid from the payment service provider 40 to the provider 30. Note that in a case where the biometric authentication of the user is failed, the processing related to the billing information may be terminated. In this case, the user may be notified that the biometric authentication is failed.

### (Technical Effect)

According to the information processing system 2 in the second example embodiment, as in the first example embodiment described above, it is possible to reduce the burden on both the user of the vehicle 20 and the facility employee, while also reducing the time required for the payment transactions and thereby preventing the opportunity loss of the facility. In the information processing system 2, in a case where the biometric authentication is successful, the payment information linked to the authentication ID of the person corresponding to the user is acquired. Therefore, it is possible to prevent unauthorized use of the payment information.

### <Third Example Embodiment>

An information processing system, an information processing method, and a recording medium according to a third example embodiment will be described with reference to FIG. 3, FIG. 6, and FIG. 7. Hereinafter, the information processing system 2 is used to describe the information processing system, the information processing method, and the recording medium according to the third example embodiment. Note that descriptions overlapping with those in the first and second example embodiments described above are appropriately omitted in the third example embodiment.

For example, in a case where a single vehicle (e.g., the vehicle 20) is shared by a married couple, an authorizer/approver for the aforementioned request for approval may be the husband or the wife. For example, in a case where a single vehicle is shared by a parent and a child, the authorizer for the aforementioned request for approval may be the parent or the adult child. In this case, a payment means when the authorizer is the parent may differ from a payment means when the authorizer is the child. That is, in a case where a single vehicle is shared by a plurality of persons, the authorizer for the request for approval may be switched depending on the situation, and the payment means may be switched depending on the authorizer.

The information processing system 2 according to the third example embodiment is configured to switch the authorizer for the request for approval depending on the situation, or to switch the payment means depending on the authorizer.

First, the registration information database 15 according to the third example embodiment will be described with reference to FIG. 6. For example, as illustrated in FIG. 6, the registration information database 15 may register/store the vehicle information, the authentication ID, the feature quantities used for biometric authentication, and the payment information in association with one another. As illustrated in FIG. 6, a piece of vehicle information (e.g., "cxxxx1") may be linked to two authentication IDs (e.g., "xxxxx1" and "xxxxx2"). Furthermore, the payment information linked to the authentication ID "xxxxx1" may be different from, or the same as, the payment information linked to the authentication ID "xxxxx2."

Next, the operation of the information processing system 2 according to the third example embodiment will be described. In a case where the output unit 12 of the server 10a outputs the request for approval regarding the billing information, to the vehicle 20 identified based on the vehicle information, the output unit 12 may determine whether or not two or more authentication IDs are linked to the vehicle information about the vehicle 20, based on the vehicle information and the registration information database 15 described above. In a case where it is determined that two or more authentication IDs are linked to the vehicle information about the vehicle 20, the output unit 12 may transmit to the vehicle 20, in addition to the request for approval, inquiry information for inquiring about who will perform biometric authentication.

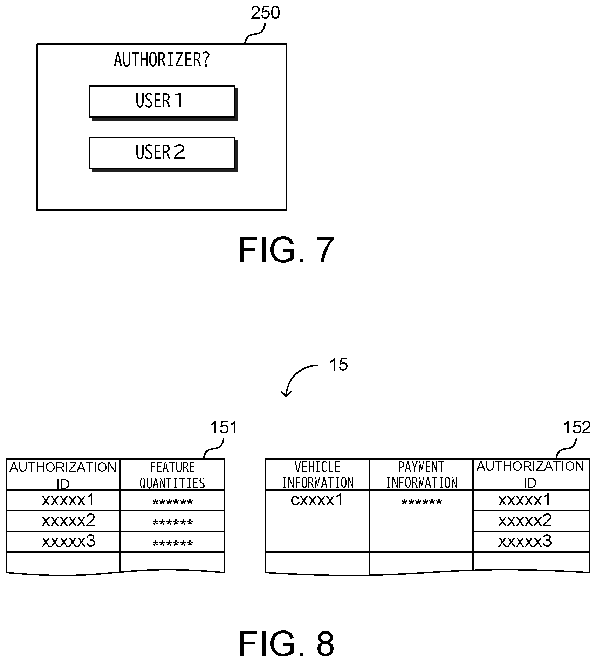

The in-vehicle device 21 of the vehicle 20, upon receiving the inquiry information outputted from the output unit 12, may display a screen 250 for selecting the authorizer as illustrated in FIG. 7. In a case where the authorizer is selected by the user of the vehicle 20, the in-vehicle device 21 may transmit, to the server 10a, information indicating the selected authorizer (e.g., the authentication ID), the user's biometric information, and the user's response to the request for approval. The second acquisition unit 13 of the server 10a may acquire the information indicating the selected authorizer, the user's biometric information, and the user's response to the request for approval.

The control unit 14 of the server 10a may acquire feature quantities linked to the authentication ID of a person corresponding to the selected authorizer, from the registration information database 15 based on the information indicating the selected authorizer. Therefore, it can be said that the information indicating the selected authorizer is information indicating a target of the biometric authentication.

The control unit 14 may control the authentication unit 141 to perform biometric authentication (here, one-to-one authentication) on the user, using the biometric information and the acquired feature quantities. By the authentication unit 141 performing one-to-one authentication as the biometric authentication of the user, for example, it is possible to improve authentication accuracy and enhance security.

Furthermore, the user of the vehicle 20 may operate the in-vehicle device 21 to pre-set a single authorizer who will respond to the request for approval. In this case, the in-vehicle device 21 may transmit information indicating the set single authorizer to the server 10a. In this case, the output unit 12 may not transmit the aforementioned inquiry information to the vehicle 20.

### (Technical Effect)

In the information processing system 2 according to the third example embodiment, a plurality of authentication IDs (in other words, a plurality of persons) may be linked to the vehicle information about a single vehicle (e.g., the vehicle 20). Furthermore, different pieces of payment information may be relatively linked to the plurality of authentication IDs linked to the vehicle information about a single vehicle. Therefore, according to the information processing system 2, it is possible to switch the authorizer for the request for approval depending on the situation, or to switch the payment means depending on the authorizer.

### (Modified Example)

Furthermore, the registration information database 15 may not contain the vehicle information. For example, as illustrated in FIG. 5, the registration information database 15 may register/store the authentication ID, the feature quantities, and the payment information in association with one another. In this case, the user responding to the request for approval may have their biometric information captured by the in-vehicle device 21. The authentication unit 141 of the server 10a may perform biometric authentication (here, one-to-N authentication) on the user, by matching the feature quantities associated with the biometric information of the user responding to the request for approval, to the feature quantities registered in the registration information database 15. In a case where the biometric authentication of the user is successful, the control unit 14 may acquire the payment information linked to the authentication ID of a person corresponding to the user. In this case as well, as in the third example embodiment described above, it is possible to switch the authorizer for the request for approval depending on the situation, or to switch the payment means depending on the authorizer.

### <Fourth Example Embodiment>

An information processing system, an information processing method, and a recording medium according to a fourth example embodiment will be described with reference to FIG. 3 and

FIG. 8. Hereinafter, the information processing system 2 is used to describe the information processing system, the information processing method, and the recording medium according to the fourth example embodiment. Note that descriptions overlapping with those in the first to third example embodiments described above are appropriately omitted in the fourth example embodiment.

In the fourth example embodiment, the vehicle 20 is assumed to be a vehicle registered in the name of a corporation (a so-called company car). Furthermore, the user of the vehicle 20 is assumed to be an employee of the corporation that owns the vehicle 20. The registration information database 15 according to the fourth example embodiment, as illustrated in FIG. 8, may include databases 151 and 152. The database 151 may register/store the authentication ID and the feature quantities used for biometric authentication in association with one another. The database 152 may register/store the vehicle information, the payment information, and the authentication ID in association with one another. Here, the vehicle information may be information about a license plate (e.g., a vehicle registration number).

Next, the operation of the information processing system 2 according to the fourth example embodiment will be described. The output unit 12 of the server 10a may output the request for approval regarding the billing information, to the vehicle 20 identified based on the vehicle information. The in-vehicle device 21 of the vehicle 20, upon receiving the request for approval outputted from the output unit 12, may notify the user of the existence of the request for approval. Thereafter, the in-vehicle device 21 may link the biometric information of the user of the vehicle 20 to the user's response to the request for approval and transmit them to the server 10a.

When the second acquisition unit 13 of the server 10a acquires the biometric information and the response to the request for approval that are linked to each other, the control unit 14 of the server 10a may control the processing related to the billing information, based on the biometric information and the response to the request for approval. For example, as a part of the processing related to the billing information, the control unit 14 may control the authentication unit 141 to perform biometric authentication on the user using the biometric information. In this case, the authentication unit 141 may perform biometric authentication on the user by matching the feature quantities associated with the biometric information to the feature quantities registered in the registration information database 151.

In a case where the biometric authentication of the user is successful, the control unit 14 may refer to the database 152 to determine whether or not a person corresponding to the user identified by the biometric authentication is permitted to use the vehicle identified by the vehicle information acquired by the first acquisition unit 11. For example, in a case where the authentication ID of the person corresponding to the identified user is linked to the vehicle information in the database 152, the control unit 14 may determine that the person corresponding to the identified user is permitted to use the vehicle identified by the vehicle information.

In a case where it is determined that the person corresponding to the identified user is permitted to use the vehicle identified by the vehicle information, the control unit 14 may acquire the payment information linked to the vehicle information in the database 152.

In a case where the user's response to the request for approval is "Approval," the control unit 14 may issue a payment instruction indicating that a predetermined amount of money should be paid to the provider 30, to the payment service provider 40, based on the acquired payment information and the billing information. As a result, the predetermined amount of money may be paid from the payment service provider 40 to the provider 30.

### (Technical Effect)

According to the information processing system 2 in the fourth example embodiment, for example, in a case where the user, who is an employee of the corporation that owns the vehicle 20, uses the vehicle 20 registered in the name of the corporation, it is possible to reduce the user's burden, and to prevent unauthorized use of the payment information linked to the vehicle information.

### <Fifth Example Embodiment>

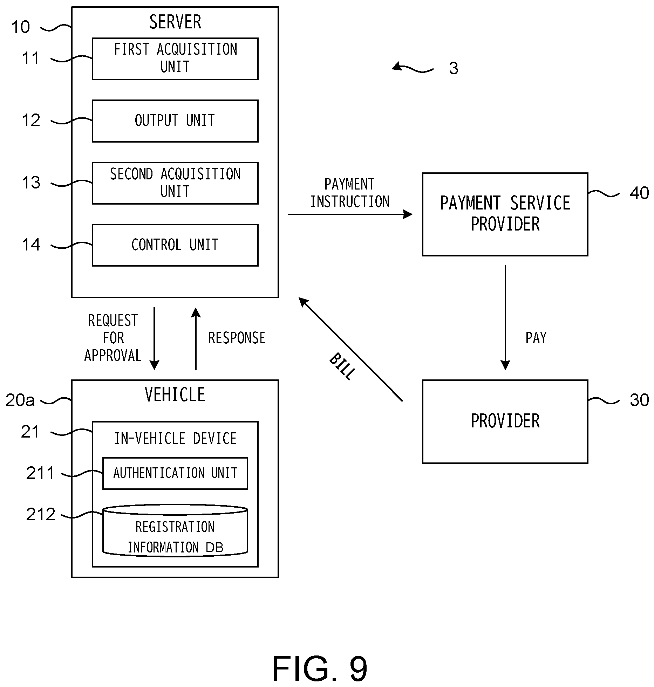

An information processing system, an information processing method, and a recording medium according to a fifth example embodiment will be described with reference to FIG. 9. Hereinafter, an information processing system 3 is used to describe the information processing system, the information processing method, and the recording medium according to the fifth example embodiment. Note that descriptions overlapping with those in the first to fourth example embodiments described above are appropriately omitted in the fifth example embodiment.

In FIG. 9, the information processing system 3 includes the server 10, a vehicle 20a, the provider 30, and the payment service provider 40. The server 10 includes the first acquisition unit 11, the output unit 12, the second acquisition unit 13, and the control unit 14. The vehicle 20a includes the in-vehicle device 21. The in-vehicle device 21 includes an authentication unit 211 and a registration information database 212. The registration information database 212 may register/store the authentication ID, the biometric feature quantities used for biometric authentication, and the payment information, in association with one another, for example, as in the registration information database 15 illustrated in FIG. 5.

An operation of the information processing system 3 will be described with reference to FIG. 9. In a case where a user of the vehicle 20a wishes to perform at least one of purchasing products and using services provided by the provider 30, the provider 30 may acquire, for example, an image containing the exterior of the vehicle 20a (specifically, a license plate), or information about the license plate of the vehicle 20a (e.g., a vehicle registration number).

The provider 30 links, for example, at least one of the image containing the exterior of the vehicle 20a and the information about the license plate of the vehicle 20a to the billing information about at least one of purchasing products and using services, and transmits them to the server 10.

The first acquisition unit 11 may acquire the vehicle information and the billing information that are linked to each other, by acquiring, from the provider 30, at least one of the image containing the exterior of the vehicle 20a and the information about the license plate of the vehicle 20a, along with the billing information. For example, the output unit 12 of the server 10 may identify the vehicle 20a based on the vehicle information.

The output unit 12 outputs the request for approval regarding the billing information, to the vehicle 20a identified based on the vehicle information. The in-vehicle device 21 of the vehicle 20a, upon receiving the request for approval outputted from the output unit 12, notifies the user of the existence of the request for approval.

The in-vehicle device 21 acquires the user's biometric information. The authentication unit 211 of the in-vehicle device 21 may perform biometric authentication on the user by matching the feature quantities associated with the acquired biometric information to the feature quantities registered in the registration information database 212.

Furthermore, in a case where only one person is registered in the registration information database 212 (in other words, in a case where there is only one authentication ID), the authentication unit 211 may perform one-to-one authentication as the biometric authentication of the user. In a case where a plurality of persons are registered in the registration information database 212 (in other words, in a case where a plurality of authentication IDs are registered), the authentication unit 211 may perform one-to-N authentication as the biometric authentication of the user.

In a case where the biometric authentication of the user is failed, the in-vehicle device 21 may notify the user that the biometric authentication is failed. In this case, the in-vehicle device 21 may transmit information indicating failed biometric authentication to the server 10, as the biometric authentication result. Upon receiving the biometric authentication result (in this case, the information indicating failed biometric authentication), the server 10 may terminate processing for the vehicle 20a. In this case, the in-vehicle device 21 may transmit only the biometric authentication result to the server 10 (in other words, the in-vehicle device 21 may not transmit the user's response to the request for approval to the server 10).

In a case where the biometric authentication of the user is successful, the in-vehicle device 21 may acquire the payment information linked to the authentication ID of a person corresponding to the user, from the registration information database 212. The in-vehicle device 21 may link the payment information and information indicating successful biometric authentication, which serve as the biometric authentication result, to the user's response to the request for approval, and transmit them to the server 10.

Furthermore, in a case where the user enters an input indicating "Rejection" in response to the request for approval, the in-vehicle device 21 may not acquire the user's biometric information. That is, in a case where the user enters an input indicating "Rejection" in response to the request for approval, the authentication unit 211 may not perform biometric authentication on the user. In this case, the in-vehicle device 21 may transmit only the response indicating "Rejection" to the server 10. Upon receiving the response to the request for approval indicating "Rejection," the server 10 may terminate the processing for the vehicle 20a.

When the second acquisition unit 13 of the server 10 acquires the biometric authentication result and the response to the request for approval that are linked to each other, the control unit 14 of the server 10 may control the processing related to the billing information, based on the biometric authentication result and the response to the request for approval. In a case where the biometric authentication result indicates that the biometric authentication is failed, the control unit 14 may terminate the processing related to the billing information. In a case where the user's response to the request for approval is "Rejection," the control unit 14 may terminate the processing related to the billing information.

In a case where the biometric authentication result indicates that the biometric authentication is successful, and the user's response to the request for approval is "Approval," the control unit 14 may issue a payment instruction indicating that a predetermined amount of money should be paid to the provider 30, to the payment service provider 40, based on the payment information as a part of the biometric authentication result and based on the billing information. As a result, the predetermined amount of money may be paid from the payment agent 40 to the provider 30.

### (Technical Effect)

According to the information processing system 3 in the fifth example embodiment, as in the first example embodiment described above, it is possible to reduce a burden on both the user of the vehicle 20a and the facility employee, while also reducing the time required for the payment transactions and thereby preventing the opportunity loss of the facility. Furthermore, the information processing system 3 may adopt the same or similar aspects as or to those exemplified in the third and fourth example embodiments described above.

### <Sixth Example Embodiment>

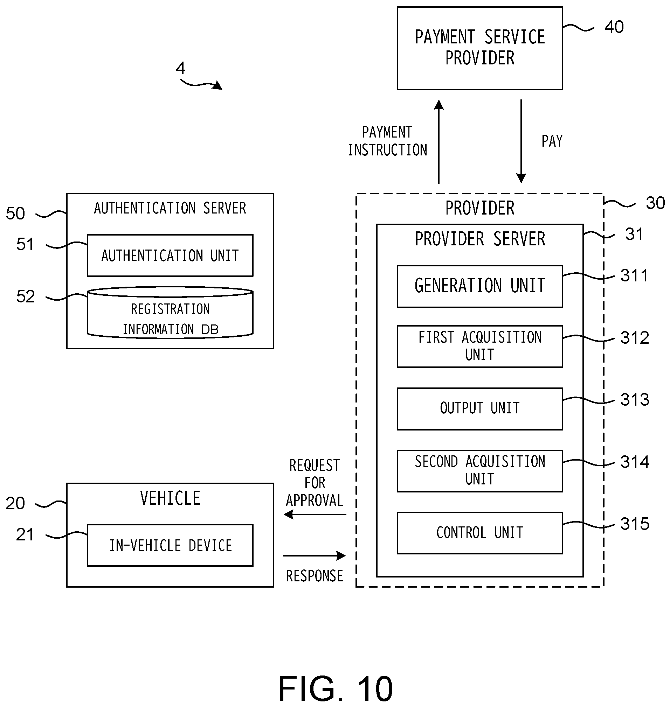

A n information processing system, an information processing method, and a recording medium according to a sixth example embodiment will be described with reference to FIG. 10. Hereinafter, an information processing system 4 is used to describe the information processing system, the information processing method, and the recording medium according to the sixth example embodiment. Note that descriptions overlapping with those in the first to fifth example embodiments described above are appropriately omitted in the sixth example embodiment.

In FIG. 10, the information processing system 4 includes the vehicle 20, a provider server 31, the payment service provider 40, and an authentication server 50. The provider server 31 is a server managed and/or operated by the provider 30.

The provider server 31 includes a generation unit 311, a first acquisition unit 312, an output unit 313, a second acquisition unit 314, and a control unit 315. The generation unit 311 may generate the billing information about at least one of products and services desired by the user of the vehicle 20. Note that the "first acquisition unit 312," the "output unit 313," the "second acquisition unit 314," and the "control unit 315" are elements corresponding to the "first acquisition unit 11," the "output unit 12," the "second acquisition unit 13," and the "control unit 14," respectively. Furthermore, the provider server 31 may be realized by a computer similar to the computer 90 illustrated in FIG. 4, for example.

The authentication server 50 includes an authentication unit 51 and a registration information database 52. The registration information database 52 may register/store the authentication ID, the feature quantities used for biometric authentication, and the payment information in association with one another, for example, as in the registration information database 15 illustrated in FIG. 5.

An operation of the information processing system 4 will be described with reference to FIG. 10. In a case where the user of the vehicle 20 wishes to perform at least one of purchasing products and using services provided by the provider 30, the generation unit 311 of provider server 31 may generate the billing information. The first acquisition unit 312 may acquire the billing information generated by the generation unit 311. The first acquisition unit 312 may acquire, for example, the image containing the exterior of the vehicle 20 (specifically, a license plate), or the information about the license plate of the vehicle 20 (e.g., a vehicle registration number). In a case where the first acquisition unit 312 acquires the image containing the exterior of the vehicle 20, the first acquisition unit 312 may apply predetermined image processing to the acquired image, thereby acquiring the information about the license plate of the vehicle 20.

The first acquisition unit 312 may link the billing information to the information about the license plate of the vehicle 20 serving as the vehicle information. The output unit 313 may identify the vehicle 20 based on the vehicle information. The output unit 12 may output the request for approval regarding the billing information, to the vehicle 20 identified based on the vehicle information. The in-vehicle device 21of the vehicle 20, upon receiving the request for approval outputted from the output unit 12, may notify the user of the existence of the request for approval.

The in-vehicle device 21 may acquire the user's response to the request for approval, based on the user's input operation. Note that in a case where the user enters an input indicating "Rejection" in response to the request for approval, the in-vehicle device 21 may not acquire the user's biometric information. In this case, the in-vehicle device 21 may transmit only the response to the request for approval indicating "Rejection" to the provider server 31. Upon receiving the response to the request for approval indicating "Rejection," the provider server 31 may terminate the processing for the vehicle 20.

In a case where the user enters an input indicating "Approval," the in-vehicle device 21 may acquire the user's biometric information. The in-vehicle device 21 may link the biometric information to the user's response to the request for approval and transmit them to the provider server 31. The second acquisition unit 314 of the provider server 31 may acquire the biometric information and the response to the request for approval that are linked to each other.

The control unit 315 of the provider server 31 may control the processing related to the billing information, based on the biometric information and the response to the request for approval. For example, the control unit 315 may transmit the biometric information to the authentication server 50.

The authentication unit 51 of the authentication server 50 may perform biometric authentication on the user by matching the feature quantities associated with the acquired biometric information to the feature quantities registered in the registration information database 212. The authentication server 50 may transmit the biometric authentication result to the provider server 31. Here, in a case where the biometric authentication of the user is successful, the authentication server 50 may acquire the payment information linked to the authentication ID of a person corresponding to the user, from the registration information database 52. In this case, the authentication server 50 may transmit, to the provider server 31, the payment information and information indicating successful biometric authentication, which serve as the biometric authentication result.

In a case where the biometric authentication result indicates that the biometric authentication is failed, the control unit 315 of the provider server 31 may terminate the processing related to the billing information. In a case where the user's response to the request for approval is "Rejection," the control unit 315 may terminate the processing related to the billing information.

In a case where the biometric authentication result indicates that the biometric authentication is successful, and the user's response to the request for approval is "Approval," the control unit 315 may issue a payment instruction indicating that a predetermined amount of money should be paid to the provider 30, to the payment service provider 40, based on the payment information as a part of the biometric authentication result and based on the billing information. As a result, the predetermined amount of money may be paid from the payment service provider 40 to the provider 30.

Alternatively, the in-vehicle device 21 may transmit the acquired biometric information, not to the provider server 31, but to the authentication server 50. The authentication unit 51 of the authentication server 50 may perform biometric authentication on the user using the aforementioned biometric information. The authentication server 50 may transmit the biometric authentication result to the in-vehicle device 21. Here, in a case where the biometric authentication of the user is successful, the authentication server 50 may acquire the payment information linked to the authentication ID of the person corresponding to the user, from the registration information database 52. In this case, the authentication server 50 may transmit, to the in-vehicle device 21, the payment information and information indicating successful biometric authentication, which serve as the biometric authentication result.

In a case where the biometric authentication result indicates that the biometric authentication is failed, the in-vehicle device 21 may notify the user that the biometric authentication is failed. In this case, the in-vehicle device 21 may transmit information indicating failed biometric authentication to the provider server 31, as the biometric authentication result. Upon receiving the biometric authentication result (in this case, the information indicating failed biometric authentication), the provider server 31 may terminate the processing for the vehicle 20. In this case, the in-vehicle device 21 may transmit only the biometric authentication result to the provider server 31 (in other words, the in-vehicle device 21 may not transmit the user's response to the request for approval to the provider server 31).

In a case where the biometric authentication result indicates that the biometric authentication is successful, the in-vehicle device 21 may link the payment information and information indicating successful biometric authentication, which serve as the biometric authentication result, to the user's response to the request for approval and transmit them to the provider server 31.

Furthermore, in a case where the user enters an input indicating "Rejection" in response to the request for approval, the in-vehicle device 21 may not acquire the user's biometric information. In this case, the in-vehicle device 21 may transmit only the response to the request for approval indicating "Rejection" to the provider server 31. Upon receiving the response to the request for approval indicating "Rejection," the provider server 31 may terminate the processing for the vehicle 20.

In a case where the biometric authentication result indicates that the biometric authentication is successful, and the user's response to the request for approval is "Approval," the control unit 315 may issue a payment instruction indicating that a predetermined amount of money should be paid to the provider 30, to the payment service provider 40, based on the payment information as a part of the biometric authentication result and based on the billing information. As a result, the predetermined amount of money may be paid from the payment service provider 40 to the provider 30.

### (Technical Effect)

According to the information processing system 4 in the sixth example embodiment, as in the first example embodiment described above, it is possible to reduce the burden on both the user of the vehicle 20 and the facility employee, while also reducing the time required for the payment transactions and thereby preventing the opportunity loss of the facility. Furthermore, the information processing system 4 may adopt the same or similar aspects as or to those exemplified in the third and fourth example embodiments described above.

### <Seventh Example Embodiment>

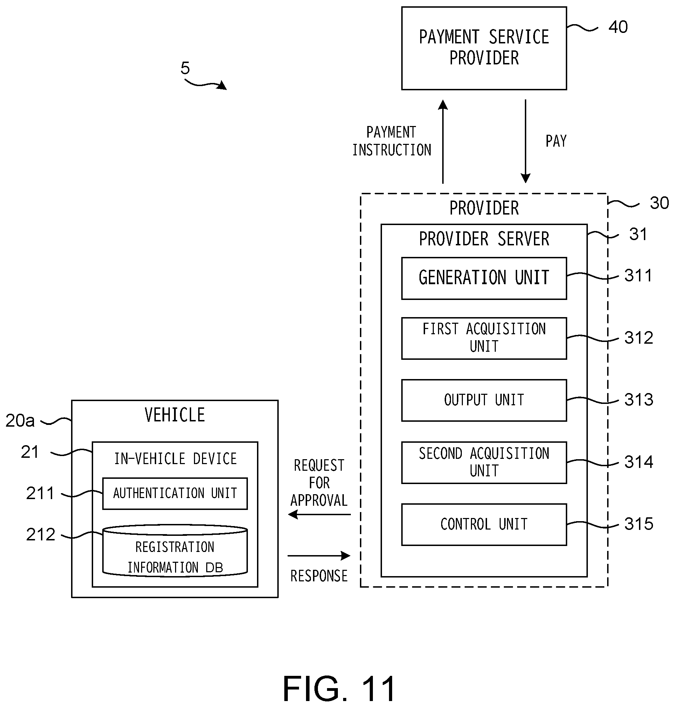

An information processing system, an information processing method, and a recording medium according to a seventh example embodiment will be described with reference to FIG. 11. Hereinafter, an information processing system 5 is used to describe the information processing system, the information processing method, and the recording medium according to the seventh example embodiment. Note that descriptions overlapping with those in the first to sixth example embodiments described above are appropriately omitted in the seventh example embodiment.

In FIG. 11, the information processing system 5 includes the vehicle 20a, the provider server 31, and the payment service provider 40.

An operation of the information processing system 5 will be described with reference to FIG. 11. In a case where the user of the vehicle 20a wishes to perform at least one of purchasing products and using services provided by the provider 30, the generation unit 311 of the provider server 31 may generate the billing information. The first acquisition unit 312 may acquire the billing information generated by the generation unit 311. The first acquisition unit 312 may acquire, for example, the image containing the exterior of the vehicle 20a (specifically, a license plate), or the information about the license plate of the vehicle 20a (e.g., a vehicle registration number). In a case where the first acquisition unit 312 acquires the image containing the exterior of the vehicle 20a, the first acquisition unit 312 may apply predetermined image processing to the acquired image, thereby acquiring the information about the license plate of the vehicle 20a.

The first acquisition unit 312 may link the billing information to the information about the license plate of the vehicle 20a serving as the vehicle information. The output unit 313 may identify the vehicle 20a based on the vehicle information. The output unit 12 may output the request for approval regarding the billing information, to the vehicle 20a identified based on the vehicle information. The in-vehicle device 21 of the vehicle 20a, upon receiving the request for approval outputted from the output unit 12, may notify the user of the existence of the request for approval.

The in-vehicle device 21 acquires the user's biometric information. The authentication unit 211 of the in-vehicle device 21 may perform biometric authentication on the user by matching the feature quantities associated with the acquired biometric information to the feature quantities registered in the registration information database 212.

Note that in a case where only one person is registered in the registration information database 212 (in other words, in a case where there is only one authentication ID), the authentication unit 211 may perform one-to-one authentication as the biometric authentication of the user. In a case where a plurality of persons are registered in the registration information database 212 (in other words, in a case where a plurality of authentication IDs are registered), the authentication unit 211 may perform one-to-N authentication as the biometric authentication of the user.

In a case where the biometric authentication of the user is failed, the in-vehicle device 21 may notify the user that the biometric authentication is failed. In this case, the in-vehicle device 21 may transmit information indicating failed biometric authentication to the provider server 31, as the biometric authentication result. Upon receiving the biometric authentication result (in this case, the information indicating failed biometric authentication), the provider server 31 may terminate the processing for the vehicle 20a. In this case, the in-vehicle device 21 may transmit only the biometric authentication result to the provider server 31 (in other words, the in-vehicle device 21 may not transmit the user's response to the request for approval to the provider server 31).

In a case where the biometric authentication of the user is successful, the in-vehicle device 21 may acquire the payment information linked to the authentication ID if a person corresponding to the user, from the registration information database 212. The in-vehicle device 21 may link the payment information and information indicating successful biometric authentication, which serve as the biometric authentication result, to the user's response to the request for approval and transmit them to the provider server 31.

Furthermore, in a case where the user enters an input indicating "Rejection" in response to the request for approval, the in-vehicle device 21 may not acquire the user's biometric information. That is, in a case where the user enters an input indicating "Rejection" in response to the request for approval, the authentication unit 211 may not perform biometric authentication on the user. In this case, the in-vehicle device 21 may transmit only the response to the request for approval indicating "Rejection" to the provider server 31. Upon receiving the response to the request for approval indicating "Rejection," the provider server 31 may terminate the processing for the vehicle 20a.

When the second acquisition unit 314 of the provider server 31 acquires the biometric authentication result and the response to the request for approval that are linked to each other, the control unit 315 of the provider server 31 may control the processing related to the billing information, based on the biometric authentication result and the response to the request for approval. In a case where the biometric authentication result indicates that the biometric authentication is failed, the control unit 315 may terminate the processing related to the billing information. In a case where the user's response to the request for approval is "Rejection," the control unit 315 may terminate the processing related to the billing information.

In a case where the biometric authentication result indicates that the biometric authentication is successful, and the user's response to the request for approval is "Approval," the control unit 315 may issue a payment instruction indicating that a predetermined amount of money should be paid to the provider 30, to the payment service provider 40, based on the payment information as a part of the biometric authentication result and based on the billing information. As a result, the predetermined amount of money may be paid from the payment service provider 40 to the provider 30.

### (Technical Effect)

According to the information processing system 5 in the seventh example embodiment, as in the first example embodiment described above, it is possible to reduce the burden on both the user of the vehicle 20a and the facility employee, while also reducing the time required for the payment transactions and thereby preventing the opportunity loss of the facility. Furthermore, the information processing system 5 may adopt the same or similar aspects as or to those exemplified in the third and fourth example embodiments described above.

### <Supplementary Notes>

The example embodiments described above may be further described as, but not limited to, the following Supplementary Notes.

### (Supplementary Note 1)

An information processing system including:
a first acquisition unit that acquires vehicle information and billing information;
an output unit that outputs a request for approval regarding the billing information to a vehicle identified based on the vehicle information;
a second acquisition unit that acquires biometric information or a biometric authentication result, and a response to the request for approval, from the vehicle; and
a control unit that controls processing related to the billing information, based on the biometric information or the biometric authentication result and based on the response.

### (Supplementary Note 2)

The information processing system according to Supplementary Note 1, wherein
the vehicle information is information about a license plate of the vehicle.

### (Supplementary Note 3)

The information processing system according to Supplementary Note 2, wherein
the first acquisition unit acquires the information about the license plate from an image containing an exterior of the vehicle.

### (Supplementary Note 4)

The information processing system according to any one of Supplementary Notes 1 to 3, wherein
the control unit identifies a target based on the biometric information or the biometric authentication result, thereby acquiring first payment information linked to the target.

### (Supplementary Note 5)

The information processing system according to any one of Supplementary Notes 1 to 3, wherein
the control unit
identifies a target based on the biometric information or the biometric authentication result, and
acquires second payment information linked to the vehicle information in a case where the target is linked to the vehicle information.

### (Supplementary Note 6)

The information processing system according to any one of Supplementary Notes 1 to 5, wherein
the second acquisition unit acquires the biometric information, and
the control unit performs biometric authentication using the biometric information, as a part of the processing related to the billing information.

### (Supplementary Note 7)

The information processing system according to any one of Supplementary Notes 1 to 6, wherein
the second acquisition unit acquires the biometric information and target information indicating a target of biometric authentication using the biometric information.

### (Supplementary Note 8)

The information processing system according to Supplementary Note 1, comprising a generation unit that generates the billing information.

### (Supplementary Note 9)

An information processing method including:
acquiring vehicle information and billing information;
outputting a request for approval regarding the billing information to a vehicle identified based on the vehicle information;
acquiring biometric information or a biometric authentication result, and a response to the request for approval, from the vehicle; and
controlling processing related to the billing information, based on the biometric information or the biometric authentication result and based on the response.

### (Supplementary Note 10)

The information processing method according to Supplementary Note 9, wherein
the vehicle information is information about a license plate of the vehicle.

### (Supplementary Note 11)

The information processing method according to Supplementary Note 10, including:
acquiring the information about the license plate from an image containing an exterior of the vehicle.

### (Supplementary Note 12)

The information processing method according to any one of Supplementary Notes 9 to 11, including:
identifying a target based on the biometric information or the biometric authentication result, thereby acquiring first payment information linked to the target.

### (Supplementary Note 13)

The information processing method according to any one of Supplementary Notes 9 to 11, including:
identifying a target based on the biometric information or the biometric authentication result; and
acquiring second payment information linked to the vehicle information in a case where the target is linked to the vehicle information.

### (Supplementary Note 14)

The information processing method according to any one of Supplementary Notes 9 to 13, including:
acquiring the biometric information; and
performing biometric authentication using the biometric information, as a part of the processing related to the billing information.

### (Supplementary Note 15)

The information processing method according to any one of Supplementary Notes 9 to 14, including:
acquiring the biometric information and target information indicating a target of biometric authentication using the biometric information.

### (Supplementary Note 16)

The information processing method according to Supplementary Note 9, including:
generating the billing information.

### (Supplementary Note 17)

A recording medium on which a computer program that allows a computer to execute an information processing method is recorded, the information processing method including:
acquiring vehicle information and billing information;
outputting a request for approval regarding the billing information to a vehicle identified based on the vehicle information;
acquiring biometric information or a biometric authentication result, and a response to the request for approval, from the vehicle; and
controlling processing related to the billing information, based on the biometric information or the biometric authentication result and based on the response.

The present disclosure is permitted to be changed, if desired, without departing from the essence or spirit of this disclosure which can be read from the claims and the entire specification. An information processing system, an information processing method, and a recording medium with such changes are also intended to be within the technical scope of the present disclosure.

### Description of Reference Codes

1, 2, 3, 4, 5: Information processing system
10, 10a: Server
11, 312: First acquisition unit
12, 313: Output unit
13, 314: Second acquisition unit
14, 315: Control unit
15, 52, 212: Registration information database
20, 20a: Vehicle
21: In-vehicle device
51, 141, 211: Authentication unit
311: Generation unit

## Claims

1. An information processing system comprising:
a first acquisition unit that acquires vehicle information and billing information;
an output unit that outputs a request for approval regarding the billing information to a vehicle identified based on the vehicle information;
a second acquisition unit that acquires biometric information or a biometric authentication result, and a response to the request for approval, from the vehicle; and
a control unit that controls processing related to the billing information, based on the biometric information or the biometric authentication result and based on the response.

2. The information processing system according to Claim 1, wherein
the vehicle information is information about a license plate of the vehicle.

3. The information processing system according to Claim 2, wherein
the first acquisition unit acquires the information about the license plate from an image containing an exterior of the vehicle.

4. The information processing system according to Claim 1, wherein
the control unit identifies a target based on the biometric information or the biometric authentication result, thereby acquiring first payment information linked to the target.

5. The information processing system according to Claim 1, wherein
the control unit
identifies a target based on the biometric information or the biometric authentication result, and
acquires second payment information linked to the vehicle information in a case where the target is linked to the vehicle information.

6. The information processing system according to Claim 1, wherein
the second acquisition unit acquires the biometric information, and
the control unit performs biometric authentication using the biometric information, as a part of the processing related to the billing information.

7. The information processing system according to Claim 1, wherein
the second acquisition unit acquires the biometric information and target information indicating a target of biometric authentication using the biometric information.

8. The information processing system according to Claim 1, comprising a generation unit that generates the billing information.

9. An information processing method comprising:
acquiring vehicle information and billing information;
outputting a request for approval regarding the billing information to a vehicle identified based on the vehicle information;
acquiring biometric information or a biometric authentication result, and a response to the request for approval, from the vehicle; and
controlling processing related to the billing information, based on the biometric information or the biometric authentication result and based on the response.

10. A recording medium on which a computer program that allows a computer to execute an information processing method is recorded, the information processing method including:
acquiring vehicle information and billing information;
outputting a request for approval regarding the billing information to a vehicle identified based on the vehicle information;
acquiring biometric information or a biometric authentication result, and a response to the request for approval, from the vehicle; and
controlling processing related to the billing information, based on the biometric information or the biometric authentication result and based on the response.
